# FASCICULE DE BREVET EUROPEEN

(11) **EP 2 083 612 B1**
(45) Date de publication et mention de la délivrance du brevet: **12.05.2010**
(21) Numéro de dépôt: 07847429.3
(22) Date de dépôt: 27.11.2007
(51) Int. Cl.: A01G 1/00, A01G 9/10

(54) **UTILISATION D'HERBES AQUATIQUES A TITRE DE SUPPORT DE CULTURE HORS SOL ET SUPPORT AINSI CONSTITUE**
VERWENDUNG VON WASSERGRÄSERN ALS TRÄGER FÜR ERDBODENLOSE KULTIVIERUNG UND SO GEBILDETER TRÄGER
USE OF AQUATIC GRASSES AS SUPPORT FOR SOIL-LESS CULTIVATION AND SUPPORT THUS FORMED

(30) Priorité: 30.11.2006 FR 0610471
(43) Date de publication de la demande: 05.08.2009
(73) Titulaire: Algieplus, 33260 La Teste De Buch (FR)
(72) Inventeur: FLOURY, Hervé, 22860 Plourivo (FR); LE DEIT, Hervé, 22300 Lannion Servel (FR); JACOB, Bruno, 22560 Trebeurden (FR); SASSI, Jean-François, 22620 Ploubazlanec (FR)
(74) Mandataire: Branger, Jean-Yves
(86) Numéro de dépôt international: PCT/EP2007/062904
(87) Numéro de publication internationale: WO 2008/065124

(56) Documents cités:
- EP-A- 1 038 433
- FR-A- 2 880 882

## Description

La présente invention concerne l'utilisation d'herbes aquatiques sèches et compactées contenant de l'acide zostérique et/ou de la zostérine, à titre de support de culture hors-sol.

Elle se rapporte également à un support de culture hors-sol constitué, au moins en partie, de telles herbes aquatiques.

La culture hors-sol de fruits et de légumes est également appelée de culture hydroponique.

Un exemple très répandu de support de culture hors-sol est constitué par la laine de roche, qui est agglomérée pour constituer des pains compacts servant à l'enracinement des plantes à cultiver.

Une solution nutritive est amenée au niveau des pains de laine de roche. Elle constitue la seule source "d'alimentation" de la plante.

De tels moyens se sont développés car ils sont simples à mettre en oeuvre et permettent de cultiver de nombreuses plantes à l'écart des maladies les plus courantes rencontrées dans les cultures "traditionnelles", dans lesquelles ces plantes sont directement plantées dans la terre.

Toutefois, la nature même de ce support souffre d'une image non écologique, alors que nous traversons une période où de nombreux consommateurs réclament une alimentation saine et des méthodes de culture les plus authentiques possibles.

On a par ailleurs proposé d'utiliser d'autres produits à titre de support de culture hors-sol.

Il s'agit principalement de fibres de coco.

Mais on a aussi proposé de faire usage d'herbes aquatiques séchées et compactées.

De telles herbes sont des plantes à inflorescences qui vivent et se développent dans l'eau. Elles sont appelées "herbes aquatiques" car la plupart d'entre elles ont des feuilles allongées en forme de ruban.

A l'état sec, de telles herbes sont utilisées notamment dans les domaines de l'isolation thermique (comme panneaux isolants), de l'isolation phonique, comme substitut à la paille pour les couvertures de maisons, à titre de matériau de calage et de rembourrage dans des réceptacles de transport de denrées.

Les posidonies sont des herbes déjà connues pour leur utilisation en tant que support de culture hors sol.

Ces produits naturels donnent de très bons résultats en termes de développement des plantes.

Toutefois, ils présentent un certain nombre d'inconvénients qui sont détaillés ci-après.

En premier lieu, ils demandent une alimentation en eau et en liquide nutritif régulière et abondante, en raison d'une forte évaporation et de la faible capacité de rétention des liquides par cet amas d'herbes séchées.

De plus, une désinfection de ces matières est la plupart du temps nécessaire, afin de réduire autant que faire se peut les risques de transmission de maladies à la plante cultivée.

Le document FR 2880882 décrit une utilisation d'herbes aquatiques pour la culture hors-sol qui sert de base à la revendication 1.

La présente invention a pour but de solutionner ces problèmes.

Ainsi, un premier objectif est de proposer un support de culture hors-sol, du type herbes aquatiques séchées qui garantit une pousse correcte des plantes à cultiver tout en réduisant le risque de transmission de maladie, par contact entre ce support et le réseau racinaire.

Un autre objectif est de proposer un support de culture hors-sol qui présente une forte rétention des liquides, permettant ainsi de réduire la fréquence d'arrosage de ce support.

La présente invention se rapporte donc à l'utilisation d'herbes aquatiques sèches et compactées contenant de l'acide zostérique et/ou de la zostérine, à titre de support de culture hors-sol.

On explicitera plus loin les fonctions et avantages de l'acide zostérique et de la zostérine.

Par le terme "contenant", on inclut aussi bien la présence d'acide zostérique et/ou de zostérine endogène(s) qu'exogène(s).

En d'autres termes, ces produits peuvent aussi bien être des constituants desdites herbes que des additifs qui imprègnent ces herbes.

Selon d'autres caractéristiques avantageuses mais non limitatives :
- l'acide zostérique et/ou de la zostérine est (sont) un (des) produit(s) endogène(s), c'est à dire un (des) constituant(s) desdites herbes ;
- lesdites herbes sont des zostéracées et préférentiellement des zostères ;
- l'acide zostérique et/ou de la zostérine est (sont) un (des) produit(s) exogène(s), c'est à dire un (des) additif(s) qui imprègne(nt) lesdites herbes.

L'invention se rapporte également à un support de culture hors-sol, caractérisé par le fait qu'il est constitué, au moins en partie, d'herbes aquatiques sèches et compactées contenant de l'acide zostérique et/ou de la zostérine.

Egalement selon d'autres caractéristiques avantageuses et non limitatives :
- l'acide zostérique et/ou de la zostérine est (sont) un (des) produit(s) endogène(s), c'est à dire un (des) constituant(s) desdites herbes ;
- lesdites herbes sont des zostéracées et de préférence des zostères ;
- l'acide zostérique et/ou de la zostérine est (sont) un (des) produit(s) exogène(s), c'est-à-dire un (des) additif(s) qui imprègne(nt) lesdites herbes ;
- le support est constitué seulement en partie d'herbes aquatiques sèches et compactées contenant de l'acide zostérique et/ou de la zostérine, et il comprend également des fibres d'origine marine ou non, naturelles ou synthétiques, ou un mélange de ces fibres ;
- il est imprégné d'une solution nutritive, et/ou d'un sel nutritif et/ou d'au moins un principe actif phytosanitaire naturel ou synthétique.

D'autres caractéristiques et avantages de la présente invention apparaîtront à la lecture de la description détaillée qui va suivre. Elle sera faite en référence aux dessins annexés dans lesquels :
- la figure 1 est une vue simplifiée d'une coupe de fibre de zostère, observée au microscope électronique ;
- la figure 2 est une vue en perspective d'un pain formant support de culture hors sol, qui est constitué au moins en partie d'herbes aquatiques sèches et compactées contenant de l'acide zostérique et/ou de la zostérine ;
- la figure 3 est un schéma montrant comment est réalisée une culture hors sol au moyen d'un pain tel que celui de la figure 2.

La présente invention est essentiellement basée sur l'exploitation des caractéristiques particulières de composants chimiques naturels (que l'on peut éventuellement produire de manière synthétique), à savoir la zostérine et l'acide zostérique.

Ces composés sont présents naturellement dans les zostéracées, qui sont des phanérogames marines qui appartiennent à une famille distincte de celle des posidonaciées.

Deux genres de zostéracées existent : les zostères et les phyllospadix.

En Europe, on observe seulement deux espèce de zostères, à savoir les zostères marina et les zostères noltii ou nana.

Comme précisé plus haut, l'invention se rapporte en particulier à à l'utilisation d'herbes aquatiques sèches et compactées contenant de l'acide zostérique et/ou de la zostérine, à titre de support de culture hors-sol.

De manière particulièrement préférée, lesdites herbes sont des zostéracées et préférentiellement des zostères.

Dans ce cas, ce sont à la fois les caractéristiques physiques et chimiques des zostères qui sont mises à profit.

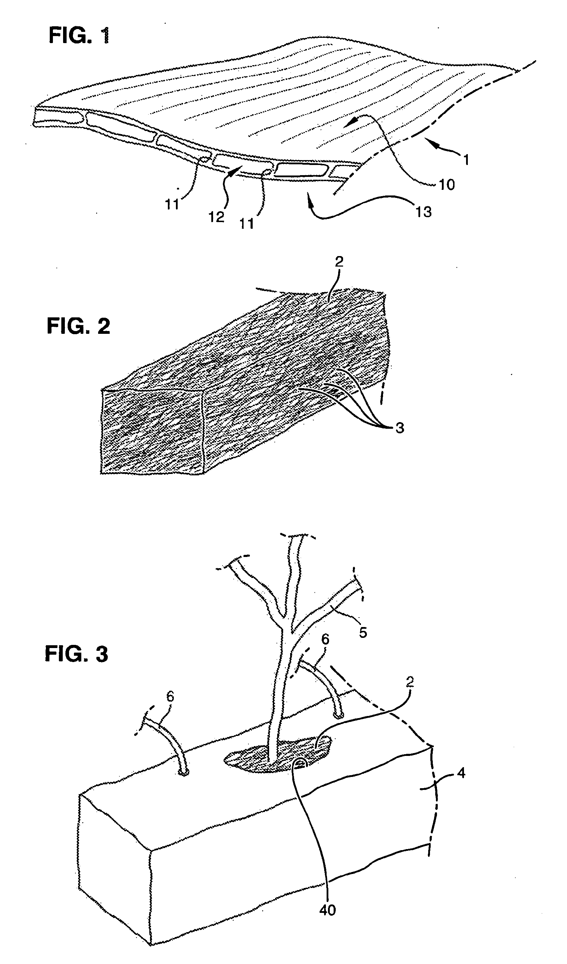

Ainsi que cela a été mentionné en début de description, la figure 1 est une vue d'une coupe de fibre de zostère, observée au microscope électronique.

Cette fibre 1 présente deux grandes faces 10 et 13, qui sont séparées par une série de cloisons intermédiaires 11 qui délimitent deux à deux une série de cavités ou alvéoles 12.

Les fibres de zostère ont donc une structure interne lacunaire, les parois des alvéoles étant constituées de cellulose et d'une pectine particulière, à savoir la zostérine.

Comme on le verra plus loin en détail, cette structure lacunaire est mise à profit selon la présente invention, pour augmenter le potentiel de rétention d'eau du support de culture hors-sol.

Les zostères renferment par ailleurs de l'acide zostérique ou acide para sulfoxy cinnamique. Il s'agit d'une molécule "anti-fouling", c'est à dire anti-moisissure, qui, en milieu marin, est active contre l'adhésion des bactéries d'algues ou de mollusques sur les feuilles de la plante.

Ils renferment aussi de l'acide rosmarinique, des flavonoïdes et des composés phénoliques qui sont autant d'antioxydants aux propriétés anti radicaux libres.

L'ensemble de ces propriétés et caractéristiques sont mises à profit lorsqu'on utilise ces herbes aquatiques à titre de supports de culture hors sol.

Pour ce faire, les herbes sont récoltées et séchées, soit naturellement, soit en étuve jusqu'à obtention d'un niveau de siccité adéquat.

A l'issue de cette opération, la matière première, de densité voisine de la valeur 1, la voit décroître pour atteindre 0,2-0,3.

On procède alors au compactage des herbes séchées, par exemple par bourrage de sacs ou par compactage dans une presse standard.

On obtient alors par exemple un pain tel que celui représenté schématiquement à la figure 2 et référencé 2. Il est constitué d'un amalgame de fibres 3 de zostères, enchevêtrées les unes dans les autres, de sorte qu'il constitue un bloc compact, qui présente une certaine cohésion mécanique.

Dans l'exemple représenté ici, on a affaire à un pain sensiblement parallélépipédique, par exemple de 60 centimètres de long, 20 à 25 centimètres de large et 10 centimètres de hauteur.

Dans des formes de réalisation non représentées, les pains pourraient être cubiques, ou avoir la forme de petits galets adaptés pour recevoir un jeune plant à développer.

A la figure 3 est représenté le pain de la figure 2, tel qu'il est utilisé à titre de support de culture hors-sol pour la culture d'un plant de tomates 5, par exemple.

Ce pain est conditionné dans une enveloppe en plastique 4, comme cela est bien connu de l'état de la technique. Cette enveloppe a une double fonction. En premier lieu, elle isole le pain du milieu extérieur, ce qui contribue à réduire le risque de transmission de maladies aux plantes cultivées.

En second lieu, elle constitue une barrière hermétique qui limite considérablement la part de liquide d'arrosage qui s'évapore.

Bien entendu, l'enveloppe 4 est percée d'une ouverture 40 permettant la plantation du plant 5.

On a référencé 6 deux petits tuyaux dont une extrémité débouche dans le pain 2, au travers de l'enveloppe 4.

L'autre extrémité de ces tuyaux est reliée à une installation d'arrosage, par exemple au goutte à goutte.

Cette installation délivre une solution nutritive à base d'eau.

Eventuellement, les fibres du pain sont imprégnées à l'avance d'une solution nutritive et/ou d'un sel nutritif et/ou d'au moins un principe actif phytosanitaire naturel ou synthétique.

Comparativement à des plantes cultivées sur des supports constitués de fibres de coco, de laine de roche ou d'autres herbes aquatiques, on observe ici que la fréquence d'arrosage peut être notablement réduite.

Cela s'explique par le fait que la structure creuse, alvéolaire des fibres retient le liquide beaucoup plus longtemps. On améliore ainsi le potentiel de rétention de liquide, ce qui ralentit la vitesse de séchage du pain. On peut donc abaisser la fréquence d'arrosage.

La bonne "santé" de la plante, en l'occurrence du plant de tomate est visible en particulier par le nombre de fruits récoltés. Mais un autre signe visuel est le développement du réseau racinaire.

Or en observant les racines de plants cultivés sur un support selon l'invention, on observe que celles-ci sont particulièrement bien développées et également réparties sur tout le volume du pain.

Ces racines sont saines, c'est à dire quelle ne portent pas les stigmates caractéristiques de certaines maladies. Cela s'explique les propriétés antifongiques et bactéricides de l'acide zostérique.

De plus, ces fibres de zostères sont intégralement biodégradables, mais avec la qualité de se dégrader très lentement, ce qui allonge d'autant la durée de vie du support.

Bien entendu, selon l'invention, il est possible de réaliser des supports de culture hors-sol constitués en partie de zostères, la partie restante étant constituée d'autres fibres naturelles ou synthétiques, seules ou en mélange.

Il va de soi qu'en abaissant le taux de zostères au sein du support, on tire moins partie des qualités et caractéristiques décrites plus haut.

Enfin, dans un mode de réalisation alternatif, on peut faire usage d'autres herbes aquatiques, que l'on aura préalablement imprégné d'acide zostérique et/ou de zostérine.

## Revendications

1. Utilisation d'herbes aquatiques sèches et compactées contenant de l'acide zostérique et/ou de la zostérine, à titre de support de culture hors-sol.

2. Utilisation selon la revendication 1, **caractérisée par le fait que** l'acide zostérique et/ou de la zostérine est (sont) un (des) produit(s) endogène(s), c'est à dire un (des) constituant(s) desdites herbes.

3. Utilisation selon la revendication 2, **caractérisée par le fait que** lesdites herbes sont des zostéracées et, de préférence, des zostères.

4. Utilisation selon la revendication 1, **caractérisée par le fait que** l'acide zostérique et/ou de la zostérine est (sont) un (des) produit(s) exogène(s), c'est à dire un (des) additif(s) qui imprègne(nt) lesdites herbes.

5. Support de culture hors-sol, **caractérisé par le fait qu'**il est constitué, au moins en partie, d'herbes aquatiques sèches et compactées contenant de l'acide zostérique et/ou de la zostérine.

6. Support de culture hors-sol selon la revendication 5, **caractérisé par le fait que** l'acide zostérique et/ou de la zostérine est (sont) un (des) produit(s) endogène(s), c'est à dire un (des) constituant(s) desdites herbes.

7. Support de culture hors-sol selon la revendication 6, **caractérisé par le fait que** lesdites herbes sont des zostéracées et, de préférence, des zostères.

8. Support de culture hors-sol selon la revendication 5, **caractérisé par le fait que** l'acide zostérique et/ou de la zostérine est (sont) un (des) produit(s) exogène(s), c'est à dire un (des) additif(s) qui imprègne(nt) lesdites herbes.

9. Support selon l'une des revendications 5 à 8 qui est constitué seulement en partie d'herbes aquatiques sèches et compactées contenant de l'acide zostérique et/ou de la zostérine, **caractérisé par le fait qu'**il comprend également des fibres d'origine marine ou non, naturelles ou synthétiques, ou un mélange de ces fibres.

10. Support selon l'une des revendications 5 à 9, **caractérisé par le fait qu'**il est imprégné d'une solution nutritive, et/ou d'un sel nutritif et/ou d'au moins un principe actif phytosanitaire naturel ou synthétique.

## Claims

1. Use of dry, compacted, herbaceous aquatic plants containing zosteric acid and / or zosterin as soilless culture medium.

2. Use according to claim 1, **characterized by** the fact that zosteric acid and / or zosterin is an endogenous product (are endogenous products), i.e. a constituent or constituents of said grasses.

3. Use according to claim 2, **characterized by** the fact that said grasses are Zosteraceae and, preferably, Zostera.

4. Use according to claim 1, **characterized by** the fact that zosteric acid and / or zosterin is an exogenous product (are exogenous products), i.e. an additive or additives impregnating said grasses.

5. Soilless culture medium, **characterized by** the fact that it consists, at least in part, of dry, compacted, aquatic grasses containing zosteric acid and / or zosterin.

6. Soilless culture medium according to claim 5, **characterized by** the fact that zosteric acid and / or zosterin is an endogenous product (are endogenous products),i.e. a constituent or constituents of said grasses.

7. Soilless culture medium according to claim 6, **characterized by** the fact that said grasses are Zosteraceae, preferably Zostera.

8. Soilless culture medium according to claim 5, **characterized by** the fact that zosteric acid and / or zosterin is an exogenous product (are exogenous products),i.e. an additive or additives impregnating said grasses.

9. Medium according to any of claims 5 to 8 consisting only in part of dry, compacted, aquatic grasses containing zosteric acid and / or zosterin, **characterized by** the fact that it also contains fibres whether or not of marine origin, natural or synthetic, or a mixture of these fibres.

10. Medium according to any of claims 5 to 9, **characterized by** the fact that it is impregnated with a nutrient solution and / or nutrient salt and / or at least one natural or synthetic active ingredient for plant health.

## Patentansprüche

1. Verwendung von getrockneten und kompaktierten Wasserkräutern, die Zosterinsäure und/oder Zosterin enthalten, als Träger einer Hors-Sol-Kultur.

2. Verwendung nach Anspruch 1, **dadurch gekennzeichnet, dass** die Zosterinsäure und/oder das Zosterin (ein) endogene(s) Produkt(e) ist (sind), d.h. (ein) Bestandteil(e) der Kräuter.

3. Verwendung nach Anspruch 2, **dadurch gekennzeichnet, dass** die Kräuter Zosteraceae und vorzugsweise Zosteren sind.

4. Verwendung nach Anspruch 1, **dadurch gekennzeichnet, dass** die Zosterinsäure und/oder das Zosterin (ein) exogene(s) Produkt(e) ist (sind), d.h. (ein) Additiv(e), welche(s) die Kräuter imprägniert/imprägnieren.

5. Träger einer Hors-Sol-Kultur, **dadurch gekennzeichnet, dass** er mindestens teilweise aus getrockneten und kompaktierten Wasserkräutern besteht, die Zosterinsäure und/oder Zosterin enthalten.

6. Träger einer Hors-Sol-Kultur nach Anspruch 5, **dadurch gekennzeichnet, dass** die Zosterinsäure und/oder das Zosterin (ein) endogene(s) Produkt(e) ist (sind), d.h. (ein) Bestandteil(e) der Kräuter.

7. Träger einer Hors-Sol-Kultur nach Anspruch 6, **dadurch gekennzeichnet, dass** die Kräuter Zosteraceae und vorzugsweise Zosteren sind.

8. Träger einer Hors-Sol-Kultur nach Anspruch 5, **dadurch gekennzeichnet, dass** die Zosterinsäure und/oder das Zosterin (ein) exogene(s) Produkt(e) ist (sind), d.h. (ein) Additiv(e), welche(s) die Kräuter imprägniert/imprägnieren.

9. Träger nach einem der Ansprüche 5 bis 8, der nur teilweise aus getrockneten und kompaktierten Wasserkräutern besteht, die Zosterinsäure und/oder Zosterin enthalten, **dadurch gekennzeichnet, dass** er auch natürliche oder synthetische Fasern marinen Ursprungs oder nicht oder eine Mischung dieser Fasern umfasst.

10. Träger nach einem der Ansprüche 5 bis 9, **dadurch gekennzeichnet, dass** er mit einer Nährlösung und/oder einem Nährsalz und/oder mindestens einem natürlichen oder synthetischen phytosanitären Wirkstoff imprägniert ist.
